# DEMANDE DE BREVET EUROPEEN

(11) **EP 1 142 641 A1**
(43) Date de publication de la demande: **10.10.2001**
(21) Numéro de dépôt: 00810308.7
(22) Date de dépôt: 07.04.2000
(51) Int. Cl.: B01L 3/00, B01J 19/00, C12Q 1/68

(54) **Préparation d'échantillons biologiques au moyen d'une matrice de micro-buses**

(30) Priorité: 04.04.2000 CH 659002000
(71) Demandeur: CSEM Centre Suisse d'Electronique et de Microtechnique SA, 2007 Neuchâtel (CH)
(72) Inventeur: Cardot, Francis, 2000 Neuchâtel (CH)
(74) Mandataire: Gresset, Jean

(57) **Abrégé**

La présente invention se rapporte à la réalisation de réseaux à haute densité d'échantillons de substances biologiques (oligonucléotides, DNA, ...) en vue de leur traitement.

Le dispositif de l'invention comporte un plateau récepteur (10) comprenant une matrice de micro-cavités (18). Il est prévu un dispensateur de substances, destiné à prendre place sur le plateau et comprenant une matrice de micro-buses dont le pas est un multiple entier de celui de la matrice de micro-cavités.

## Description

La présente invention se rapporte à la réalisation de réseaux à haute densité d'échantillons de substances biologiques (oligonucléotides, DNA,...) en vue de leur traitement.

De tels réseaux sont des outils particulièrement utiles dans le domaine de la biologie moléculaire, ainsi que l'attestent notamment les publications suivantes: "High-density oligonucleotide arrays" (A. P. Blanchard et Al.-Biosensors & Bioelectronics, Vol. 11, N° 6/7, pp. 686-690, 1996) et "Array of hope" (E. S. Lander - Nature Genetics Supplement, Vol. 21, January 1999).

La présente invention a pour but de fournir un dispositif et un procédé pour la préparation de réseaux de ce type avec, comme principal objectif, l'obtention d'échantillons aussi miniaturisés que possible sans que leur reproductibilité en soit affectée.

De façon plus précise, l'invention concerne un dispositif pour la préparation d'échantillons de substances biologiques, caractérisé en ce qu'il comporte:
- un plateau récepteur comprenant une matrice de micro-cavités,
- un dispensateur desdites substances, destiné à prendre place sur le plateau et comprenant une matrice de micro-buses dont le pas est un multiple entier de celui de la matrice de micro-cavités, et
- des moyens pour faire passer des échantillons de substances de chacune desdites micro-buses vers l'une desdites micro-cavités.

De préférence, le plateau récepteur est un bloc de silicium dont la face supérieure est recouverte d'une couche d'un matériau hydrophile, elle-même recouverte d'une couche d'un matériau hydrophobe percée d'une pluralité d'ouvertures ayant pour fond la couche hydrophile sous-jacente et constituant la matrice de micro-cuvettes. Les micro-cuvettes se trouvent, de préférence, au fond de cavités pratiquées dans le plateau récepteur.

De préférence également, le dispensateur est un bloc de silicium percé d'une pluralité d'ouvertures traversantes dont les parois sont recouvertes d'une couche d'un matériau hydrophile et constituant la matrice de micro-buses. La face inférieure du bloc de silicium est alors recouverte d'une couche de matériau hydrophobe.
Avantageusement, le matériau hydrophile utilisé est le carbone, tandis que le matériau hydrophobe est le diamant ou le carbone diamanté.

Selon un mode de réalisation préféré, les moyens pour faire passer des échantillons de substances de chacune des micro-buses vers l'une des micro-cavités comportent un couvercle disposé sur le dispensateur pour y créer une enceinte étanche à l'intérieur de laquelle une surpression peut être établie.

L'invention concerne également un procédé de préparation d'échantillons de substances biologiques, caractérisé en ce qu'il consiste à se munir d'un dispositif tel que défini ci-dessus et à effectuer les opérations suivantes:
- remplissage des micro-buses du dispensateur par des substances biologiques liquides,
- dépôt d'une goutte de matériau photopolymérisable dans le fond des micro-cuvettes du plateau récepteur,
- réalisation d'une enceinte étanche transparente sur le dispensateur,
- mise en place du dispensateur sur le plateau récepteur de manière à ce que chacune de ses micro-buses se trouve centrée sur l'une des micro-cuvettes,
- établissement d'une surpression dans l'enceinte étanche de manière à faire descendre les substances retenues dans les micro-buses sur les micro-cuvettes au contact des gouttes de matériau photopolymérisable qu'elles contiennent,
- irradiation du dispensateur par un flux de rayonnement UV de manière à polymériser lesdites gouttes saturées desdites substances, et
- enlèvement du dispensateur de manière à séparer les gouttes polymérisées retenues dans les micro-cuvettes du reste du liquide contenu dans les micro-buses.

En variante, le procédé selon l'invention peut aussi comporter les opérations suivantes:
- remplissage des micro-buses du dispensateur par des solutions contenant à la fois des substances biologiques et un matériau photopolymérisable,
- réalisation d'une enceinte étanche sur le dispensateur,
- mise en place du dispensateur sur le plateau récepteur de manière à ce que chacune de ses micro-buses se trouve centrée sur l'une des micro-cuvettes,
- établissement d'une surpression dans l'enceinte étanche de manière à faire descendre les substances retenues dans les micro-buses sur les micro-cuvettes,
- enlèvement du dispensateur de manière à séparer la portion du liquide retenue dans les micro-cuvettes du reste du liquide contenu dans les micro-buses, et
- irradiation du plateau récepteur par un flux de rayonnement UV de manière à polymériser les gouttes de liquide retenues dans les micro-cuvettes.

D'autres caractéristiques de l'invention ressortiront de la description qui va suivre, faite en regard du dessin annexé, sur lequel:
- la figure 1 est une vue en perspective d'un plateau récepteur,
- la figure 2 est vue partielle agrandie en coupe du plateau de la figure 1,
- la figure 3 est une vue en perspective d'un dispensateur,
- la figure 4 est une vue partielle agrandie en coupe du dispensateur de la figure 3,
- la figure 5 montre les dimensions relatives des micro-cuvettes et des micro-buses; et
- les figures 6 et 7 illustrent deux variantes du procédé mettant en oeuvre le dispensateur et le plateau récepteur.

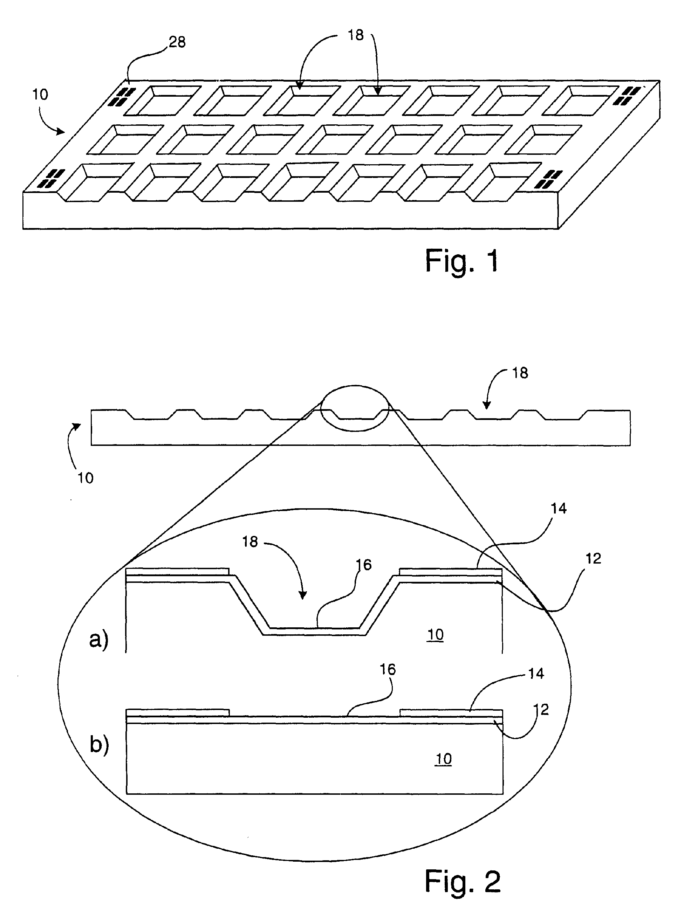

On se référera, tout d'abord, aux figures 1 et 2 qui montrent un plateau en silicium 10, de forme rectangulaire , ayant typiquement un côté de 1.05 cm et une épaisseur de 0.5 mm. Comme le montre mieux la figure 2, la face supérieure de ce plateau est recouverte d'une couche 12 d'un matériau hydrophile, tel que du carbone, elle-même recouverte d'une couche 14 d'un matériau hydrophobe, tel que du diamant ou du carbone diamanté (ou "DLC" pour Diamond-Like Carbon en anglais). Cette couche hydrophobe comporte une pluralité d'ouvertures formant une matrice de micro-cuvettes carrées 16 ayant pour fond la couche hydrophile sous-jacente. Le dépôt de ces deux couches est réalisé par toute technique connue, notamment par pulvérisation.

Selon un premier mode de réalisation illustré par la figure 2a, les micro-cuvettes 16 se trouvent au fond de cavités 18 évasées et de forme carrée, avantageusement réalisées dans le plateau 10, selon un procédé connu d'attaque chimique anisotropique du silicium à l'aide d'hydroxyde de potassium (KOH).

Selon un deuxième mode de réalisation, illustré par la figure 2b, les micro-cuvettes 16 ne sont plus au fond de cavités mais simplement formées sur la face supérieure plane du plateau 10.

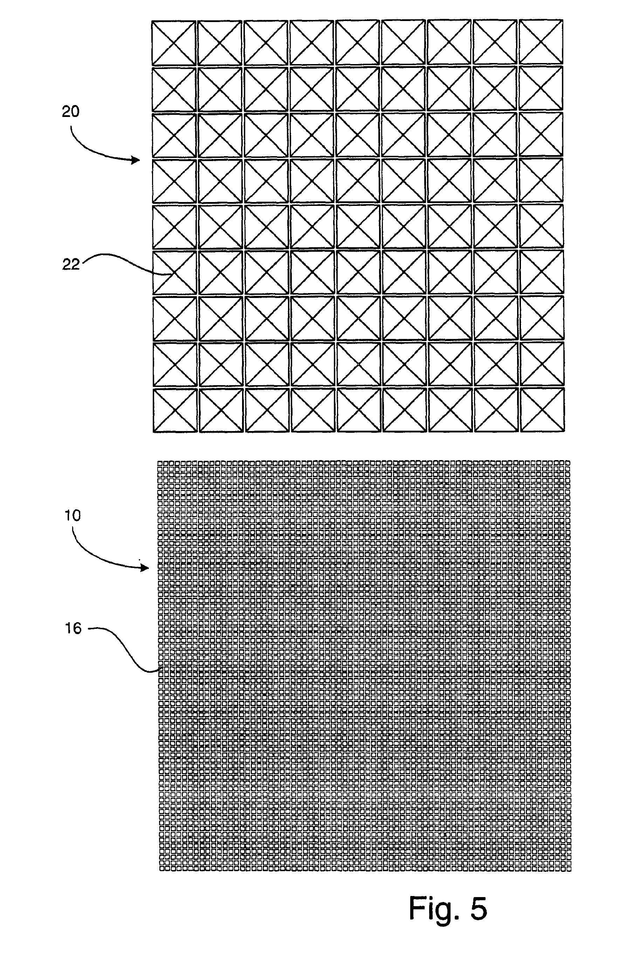

Dans l'exemple décrit (figure 5), la matrice comporte 72 x 72, soit 5184 micro-cuvettes 16, de 50 µm de côté et espacées les unes des autres d'un pas de 0.15 mm (150 µm). Les cavités 18 ont une profondeur de 40 µm, au fond, un côté de 70 µm et, au sommet, un côté de 110 µm.

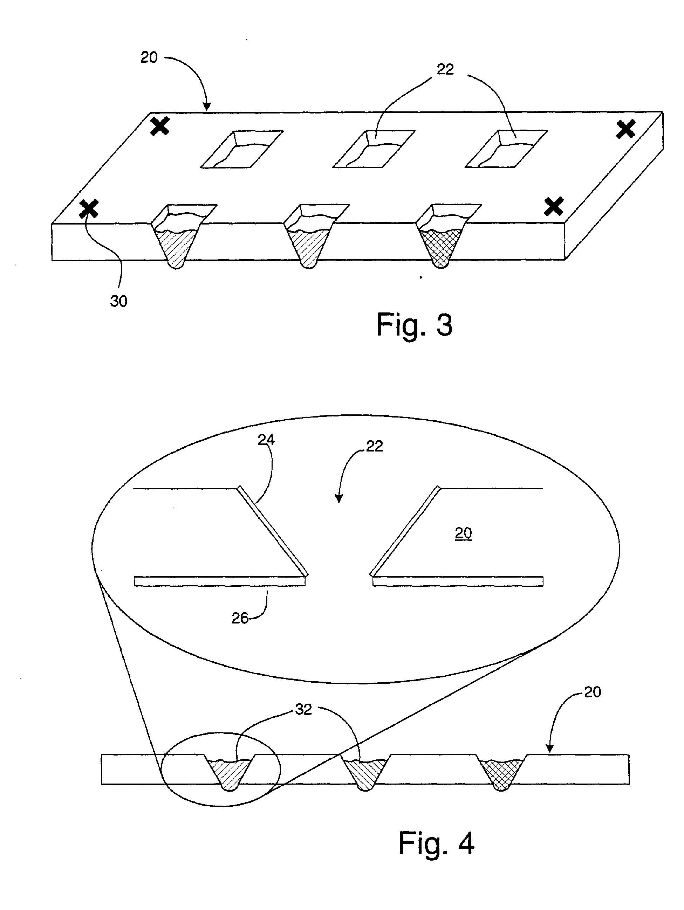

On se référera maintenant aux figures 3 et 4 qui montrent un dispensateur 20 en silicium, de forme rectangulaire, ayant typiquement un côté de 1.15 cm et une épaisseur de 0.5 mm. Ce dispensateur est percé d'une matrice de micro-buses 22, de forme carrée et s'évasant de sa face inférieure vers sa face supérieure. Comme les micro-cuvettes 16, ces micro-buses sont avantageusement réalisées par attaque chimique anisotropique du silicium à l'aide d'hydroxyde de potassium (KOH). Par ailleurs, le pas de la matrice de micro-buses est un multiple du pas de la matrice de micro-cuvettes.

Dans l'exemple décrit (figure 5), le dispensateur 20 comporte 9 x 9, soit 81 micro-buses 20, espacées les unes des autres d'un pas de 1.2 mm (1200 µm), soit 8 fois plus grand que le pas de la matrice de micro-cuvettes 16. A titre indicatif, les microbuses 22 ont, à la base, un côté de 50 µm et, au sommet, un côté de 1100 µm (1.1 mm).

Comme le montre mieux la figure 4, les micro-buses 22 sont recouvertes d'une couche 24 d'un matériau hydrophile, tel que du carbone, tandis que la face inférieure du dispensateur 20 est recouverte d'une couche 26 d'un matériau hydrophobe, tel que du diamant dopé ou du carbone diamanté (DLC) également dopé. Le dépôt de ces deux couches est réalisé par toute technique connue, notamment par pulvérisation.

Le plateau 10 et le dispensateur 20 constituent les deux organes essentiels du dispositif selon l'invention. Ainsi qu'il apparaîtra mieux dans la suite de la description, le dispensateur 20 sert à déposer de manière précise, à l'aide de ses micro-buses 22, des échantillons de substances biologiques dans les micro-cuvettes 16 du plateau 10. Afin de permettre un positionnement correct du dispensateur par rapport au plateau, la face supérieure du plateau porte des marques d'alignement 28 disposées, par exemple, à ses quatre angles. De son côté, l'une des faces du dispensateur porte également des marques d'alignement 30. La manière d'utiliser ces marques sera expliquée plus loin.

Afin de permettre une meilleure compréhension de l'invention, la figure 5 représente schématiquement, vues de dessus, la matrice de 9 x 9 micro-buses 22 et la matrice de 72 x 72 micro-cuvettes 16.

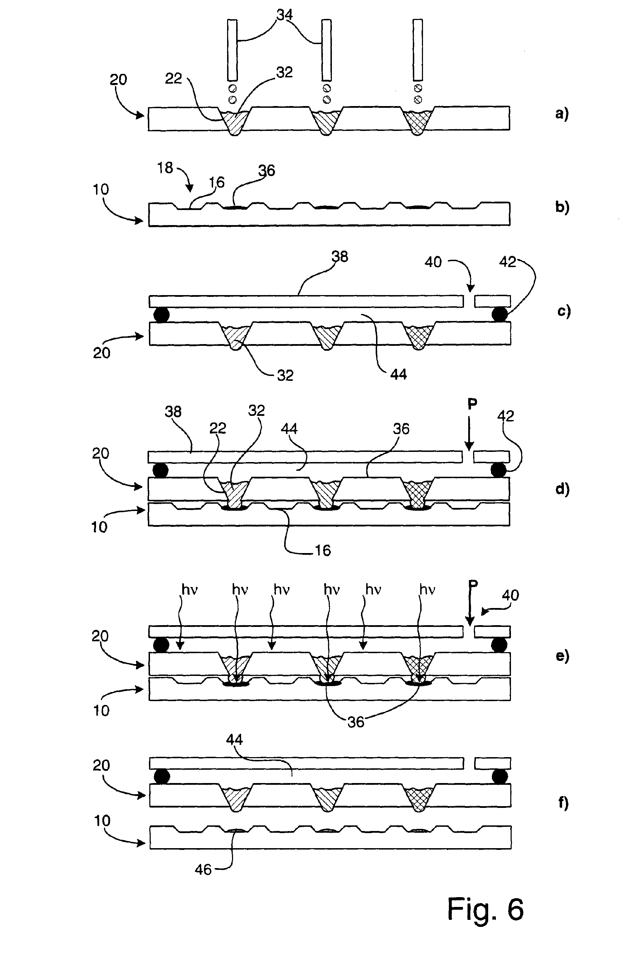

On se référera maintenant à la figure 6 qui montre les différentes opérations permettant de déposer des échantillons d'une substance biologique sur le plateau 10. Ces opérations sont énumérées ci-dessous.
- Opération 1 (figure 6a). Les micro-buses 22 du dispensateur 20 sont remplies par diverses substances biologiques liquides 32 à l'aide d'un réseau de micro-pipettes 34. La couche hydrophile 24 sert alors à maintenir le liquide dans les micro-cuvettes, tandis que la couche hydrophobe 26, au contraire, le repousse. Cela évite que les micro-buses se vident prématurément.
- Opération 2 (figure 6b). Les fonds des cavités 18 du plateau 10 reçoivent une goutte 36 de matériau photopolymérisable, tel que décrit dans le document EP 484 472. Les gouttes se concentrent dans les micro-cuvettes 16 et s'accrochent à elles du fait de leur fond en matériau hydrophile 12.
- Opération 3 (figure 6c). Le dispensateur 20 est recouvert d'une plaque transparente 38, en quartz par exemple, percée d'une ouverture 40. Cette plaque repose sur le dispensateur par l'intermédiaire d'un joint 42 afin de créer une enceinte étanche 44 ayant, typiquement, une épaisseur de 1 mm.
- Opération 4 (figure 6d). Le dispensateur 20 est placé sur le plateau 10. Le centrage précis de chacune des 81 micro-buses 22 sur une micro-cuvette 16 est réalisé, grâce aux marques 28 et 30, à l'aide d'un appareil d'alignement optique du type utilisé de manière courante en microélectronique. Compte tenu des dimensions relatives différentes des micro-cuvettes 16 et des micro-buses 22 (se référer à la figure 5), bien que le dispensateur 20 couvre la totalité de la surface du plateau 10, seulement 81 des 5184 micro-cuvettes 16 se trouvent en regard d'une micro-buse 22.
- Opération 5 (figure 6d). Un gaz neutre est introduit par l'ouverture 40 dans l'enceinte étanche 44 de manière à y établir une surpression, typiquement de quelques millibars. Ceci a pour effet de faire descendre le liquide 32, retenu jusqu'ici dans les micro-buses 22, sur les micro-cuvettes 16 au contact de la goutte 36 de matériau photopolymérisable qui se sature alors du liquide introduit. La couche hydrophobe 14 évite que le liquide se disperse autour des micro-cuvettes.
- Opération 6 (figure 6e). Le dispensateur 20 est soumis, à travers la plaque transparente 38, à un flux de rayonnement UV qui a pour effet de polymériser la goutte 36 saturée de la substance biologique.
- Opération 7 (figure 6f). L'enceinte 44 est dépressurisée et le dispensateur 20 est enlevé. Il y a alors séparation entre la goutte polymérisée 36 adhérant au fond des micro-cuvettes 16 et le reste du liquide qui est attiré par le matériau hydrophile 24 recouvrant les micro-buses 22. 81 des micro-cuvettes 16 du plateau contiennent alors des échantillons 46 qui sont fixés sur leur fond et pourront être analysés.

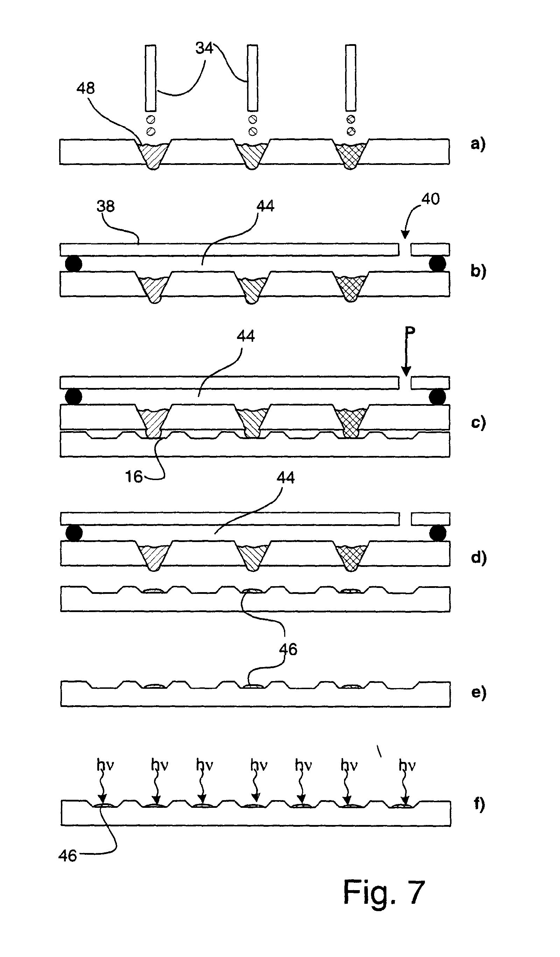

On se référera enfin à la figure 7 qui illustre une variante du procédé précédemment décrit, les éléments communs aux deux procédés étant désignés par les mêmes numéros de référence. Les opérations effectuées sont les suivantes.
- Opération 1 (figure 7a). Les micro-buses 22 du dispensateur 20 sont remplies par des solutions 48 contenant à la fois des substances biologiques et le matériau photopolymérisable.
- Opération 2 (figure 7b). Le dispensateur 20 est recouvert de la plaque 38 qui n'a plus besoin, alors, d'être transparente.
- Opération 3 (figure 7c). Le dispensateur 20 est placé sur le plateau 10.
- Opération 4 (figure 7c). Un gaz neutre est introduit par l'ouverture 40 dans l'enceinte 44 de manière à y établir une surpression et faire descendre le liquide 48 des micro-buses 22 sur le fond des micro-cuvettes 16 où il se concentre sur le matériau hydrophile 12 et s'accroche à lui.
- Opération 5 (figure 7d). L'enceinte 44 est dépressurisée et le dispensateur 20 enlevé. Il y a alors séparation entre, d'une part, la portion du liquide qui adhère au matériau hydrophile 12 du fond des micro-cuvettes 16 et, d'autre part, le reste du liquide qui est attiré par le matériau hydrophile 24 recouvrant les micro-buses 22. Les portions de liquide restant sur le fond des micro-cuvettes 16 constituent les échantillons 46.
- Opération 6 (figure 7e). Le plateau 10 est porté à une température qui permet de faire évaporer le solvant contenu dans les échantillons 46 sans en affecter les caractéristiques biologiques.
- Opération 7 (figure 7f). Le plateau 10 est soumis à un flux de rayonnement UV qui a pour effet de polymériser les échantillons 46. Ceux-ci sont fixés sur le fond des micro-cuvettes 16 et sont prêts pour être analysés.

Quel que soit le mode opératoire utilisé, on rappellera, en se référant aux valeurs données précédemment à titre d'exemple, qu'il permet de former un échantillon 46 dans seulement 81 des 5184 micro-cuvettes du plateau. Afin de doter la totalité de ces micro-cuvettes d'un échantillon, il y a donc lieu d'exécuter 64 fois (81 x 64 = 5184) les mêmes opérations en utilisant 64 dispensateurs identiques à celui décrit, à la seule différence que leurs marques 30 sont disposées de manière à ce que l'alignement des micro-buses 22 se fasse sur des micro-cuvettes 16 non encore dotées de leurs échantillons. Il y a lieu de noter que les fonctions de polymérisation et d'évaporation de solvant peuvent n'être effectuées qu'une fois la totalité des micro-cuvettes remplies.

## Revendications

1. Dispositif pour la préparation d'échantillons de substances biologiques à analyser, **caractérisé en ce qu'**il comporte:
- un plateau récepteur (10) comprenant une matrice de micro-cavités (18),
- un dispensateur (20) desdites substances destiné à prendre place sur ledit plateau et comprenant une matrice de micro-buses (22) dont le pas est un multiple entier de celui de la matrice de micro-cavités, et
- des moyens pour faire passer des échantillons de substances de chacune desdites micro-buses vers l'une desdites micro-cavités.

2. Dispositif selon la revendication 1, **caractérisé en ce que** le plateau récepteur est un bloc de silicium dont la face supérieure est recouverte d'une couche d'un matériau hydrophile (12), elle-même recouverte d'une couche d'un matériau hydrophobe (14) percée d'une pluralité d'ouvertures (18) ayant pour fond (16) la couche hydrophile sous-jacente et constituant ladite matrice de micro-cuvettes.

3. Dispositif selon la revendication 2, **caractérisé en ce que** les micro-cuvettes se trouvent au fond de cavités pratiquées dans le plateau récepteur.

4. Dispositif selon la revendication 1, **caractérisé en ce que** le dispensateur est un bloc de silicium percé d'une pluralité d'ouvertures traversantes (22) dont les parois sont recouvertes d'une couche d'un matériau hydrophile (24) et constituant ladite matrice de micro-buses.

5. Dispositif selon la revendication 4, **caractérisé en ce que** la face inférieure dudit bloc de silicium est recouverte d'une couche de matériau hydrophobe (26).

6. Dispositif selon l'une des revendications 2 à 5, **caractérisé en ce que** ledit matériau hydrophile est le carbone.

7. Dispositif selon l'une des revendications 2 à 5, **caractérisé en ce que** ledit matériau hydrophobe est le diamant ou le carbone diamanté.

8. Dispositif selon l'une des revendications 1 à 7, **caractérisé en ce que** les moyens pour faire passer des échantillons de substances de chacune des micro-buses vers l'une des micro-cavités comportent un couvercle (38) disposé sur le dispensateur pour y créer une enceinte étanche (44) à l'intérieur de laquelle une surpression peut être établie.

9. Procédé de préparation d'échantillons de substances biologiques à analyser, **caractérisé en ce qu'**il consiste à se munir d'un dispositif selon les revendications 1 à 8 et à effectuer les opérations suivantes:
- remplissage des micro-buses du dispensateur par des substances biologiques liquides (32),
- dépôt d'une goutte de matériau photopolymérisable (36) dans le fond des micro-cuvettes du plateau récepteur,
- réalisation d'une enceinte étanche transparente (38, 42) sur le dispensateur,
- mise en place du dispensateur sur le plateau récepteur de manière à ce que chacune de ses micro-buses se trouve centrée sur l'une des micro-cuvettes,
- établissement d'une surpression dans l'enceinte étanche de manière à faire descendre les substances retenues dans les micro-buses sur les micro-cuvettes au contact des gouttes de matériau photopolymérisable qu'elles contiennent,
- irradiation du dispensateur par un flux de rayonnement UV de manière à polymériser lesdites gouttes saturées desdites substances, et
- enlèvement du dispensateur de manière à séparer les gouttes polymérisées retenues dans les micro-cuvettes du reste du liquide contenu dans les micro-buses.

10. Procédé de préparation d'échantillons de substances biologiques à analyser, **caractérisé en ce qu'**il consiste à se munir d'un dispositif selon les revendications 1 à 8 et à effectuer les opérations suivantes:
- remplissage des micro-buses du dispensateur par des solutions (48) contenant à la fois des substances biologiques et un matériau photopolymérisable,
- réalisation d'une enceinte étanche sur le dispensateur,
- mise en place du dispensateur sur le plateau récepteur de manière à ce que chacune de ses micro-buses se trouve centrée sur l'une des micro-cuvettes,
- établissement d'une surpression dans l'enceinte étanche de manière à faire descendre les substances retenues dans les micro-buses sur les micro-cuvettes,
- enlèvement du dispensateur de manière à séparer la portion du liquide retenue dans les micro-cuvettes du reste du liquide contenu dans les micro-buses, et
- irradiation du plateau récepteur par un flux de rayonnement UV de manière à polymériser les gouttes de liquide retenues dans les micro-cuvettes.
